# EUROPEAN PATENT SPECIFICATION

(11) **EP 1 278 004 B1**
(45) Date of publication and mention of the grant of the patent: **27.12.2006**
(21) Application number: 01117558.5
(22) Date of filing: 20.07.2001
(51) Int. Cl.: F16N 3/12, B05B 7/24, F16N 5/00

(54) **Angle adjustable grease dispensing gun**
Winkeleinstellbare Fettpresse
Pistolet à graisse avec réglage angulaire

(43) Date of publication of application: 22.01.2003
(73) Proprietor: KUO, Wen-I, Taichung Hsien (TW)
(72) Inventor: KUO, Wen-I, Taichung Hsien (TW)
(74) Representative: Wehnert, Werner

(56) References cited:
- FR-A- 2 784 314
- US-A- 2 183 013
- US-A- 2 435 647
- US-A- 5 474 214
- US-A- 5 779 105
- US-A- 5 803 360
- US-B1- 6 213 410

## Description

The present invention relates to a grease dispensing gun wherein the handle and the barrel of the grease gun can be pivoted with each other.

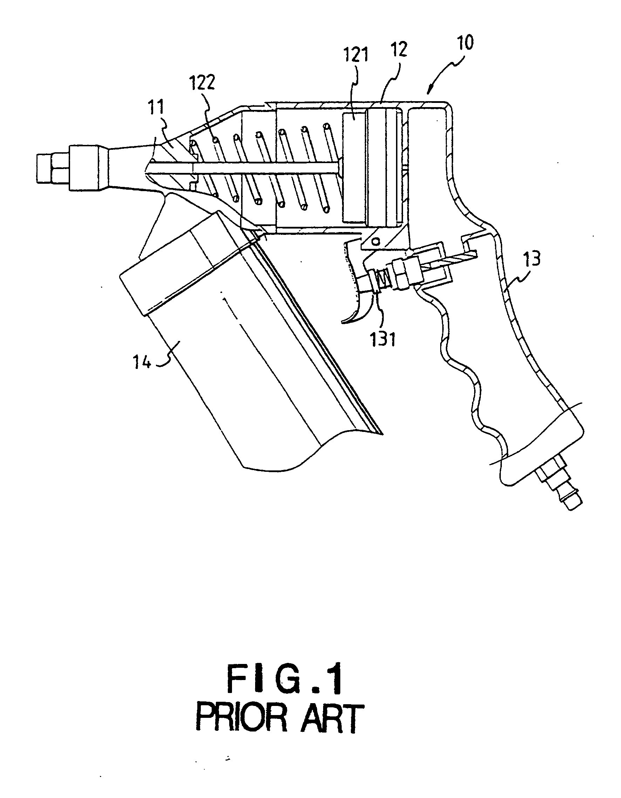

A conventional grease dispensing gun 10 is shown in Fig. 1 and generally includes a handle 13 with a trigger means 131, a barrel 12 connected to the handle 13 and a container 14 connected to the barrel 12 of the grease gun. The container 14 receives grease therein so as to be provided into the barrel 12 and dispensed form a nozzle member 11 connected to a front end of the barrel 11. A piston 121 connected to a piston rod is received in the barrel 12 and a spring 122 is mounted to the piston rod so that when pulling the trigger means 131, the air pressure provided from a fitting connected to a lower end of the handle 13 will send the grease 14 out from the nozzle member 11. However, because the barrel 12, the handle 13 and the container 14 are made to be an one-piece member, so that the user sometimes has to rotate the whole grease gun to access a desired position because the space where the desired position does not allow the container 14 to be inserted. The user's hand turns an angle to hold the handle 13 and this will affect the aim of the nozzle member 11.

The present invention intends to provide a grease dispensing gun wherein a bolt is used to connect the barrel and the handle so that the barrel can be rotated to shift the position of the container on the barrel.

In accordance with one aspect of the present invention, there is provided a grease dispensing gun which comprises a handle having a trigger device and a fitting respectively connected thereto. A connection member is connected to a top end of the handle and a barrel is rotatably engaged with an inner periphery of the connection member at its first end. A nozzle member is connected to a second end of the barrel and a container is connected to the nozzle member. A board is connected to the first end of the barrel and a bolt extends through the connection member and is engaged with the board.

The primary object of the present invention is to provide a grease dispensing gun wherein the barrel together with the container can be rotated relative to the handle.

The present invention will become more obvious from the following description when taken in connection with the accompanying drawings which show, for purposes of illustration only.

### IN THE DRAWINGS

Fig. 1 is a cross sectional view to show a conventional grease dispensing gun;
Fig. 2 is a cross sectional view to show a grease dispensing gun of the present invention, and
Fig. 3 is an illustrative view to show the container of the grease dispensing gun of the present invention can be rotated about a connection member on a top end of the handle.

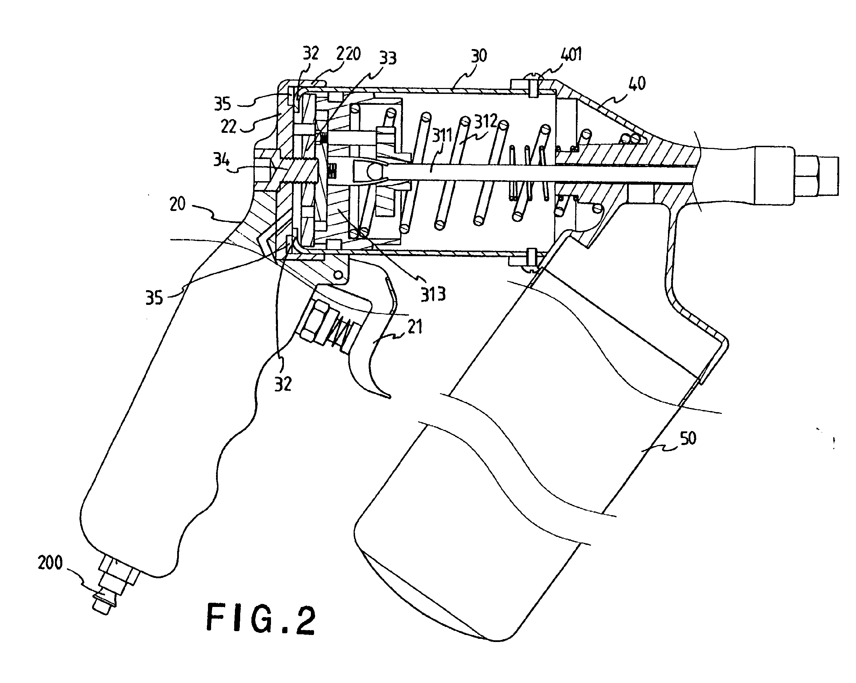

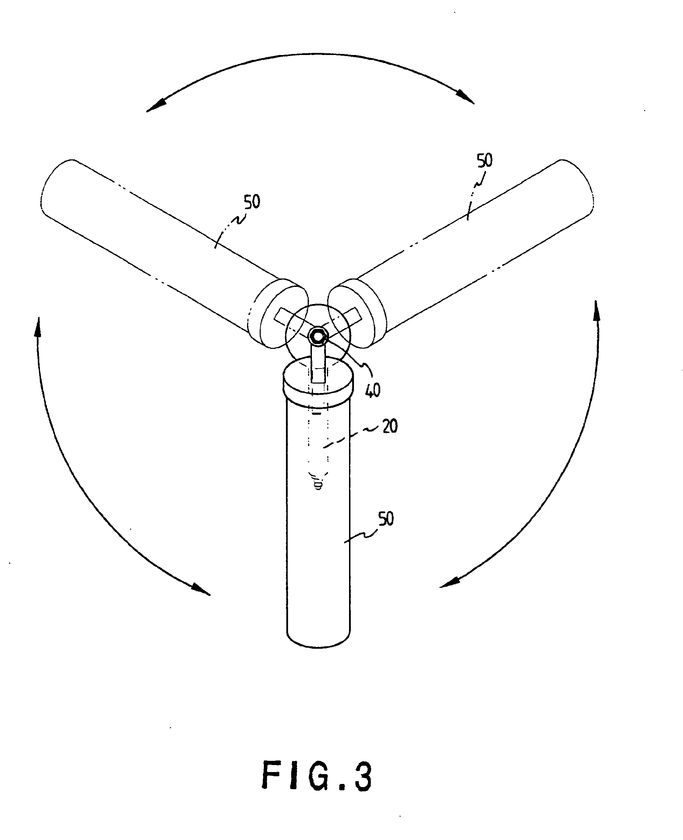

Referring to Figs. 2 and 3, the grease dispensing gun of the present invention comprises a handle 20 having a trigger device 21 connected to a side thereof and a fitting 200 is connected to a lower end of the handle 20 so as to be connected to a hose of a compressor (not shown). A connection member 22 is connected to a top end of the handle 20 and has a first flange 220 extending from a periphery thereof. A first end of a barrel 30 has a second flange 32 extending radially inward therefrom and the second flange 32 is engaged with an inner periphery of the first flange 220 of the connection member 22. A board 33 is securely engaged with the second flange 32 because the diameter of the board 33 is larger than an opening defined by the second flange 220 so that the barrel 30 will not disengaged from the barrel 30. A seal 35 is connected between the second flange 32 and the connection member 22. A nozzle member 40 is connected to a second end of the barrel 30 by bolts 410 and a container 50 is connected to the nozzle member 40. A piston device is received in the barrel 30 and includes a piston rod 311 with a spring 312 mounted thereto and a piston 313 connected to the piston rod 311.

A bolt 34 extends through the connection member 22 and is threadedly engaged with the board 33. The board 33 together with the barrel 30 are connected to the connection member 22.

When adjusting the barrel 30, the bolt 34 is unscrewed to be disengaged from the board 33, and then the barrel 30 can be rotated about the connection member 22. By this way, the container 50 is rotated away from its position while the handle 20 is remained at its position. Therefore, the user can hold the handle as usual and pulls the trigger device 21. Because the user's hand is not turned an angle, the nozzle member 40 can be aimed to a desired position easily.

While we have shown and described the embodiment in accordance with the present invention, it should be clear to those skilled in the art that further embodiments may be made without departing from the scope of the present invention.

## Claims

1. A grease dispensing gun comprising:
a handle having a trigger device and a fitting respectively connected thereto, a connection member connected to a top end of said handle;
a barrel having a first end thereof rotatably engaged with an inner periphery of said connection member, a nozzle member connected to a second end of said barrel and a container connected to said nozzle member, a board connected to said first end of said barrel, and
a bolt extending through said connection member and engaged with said board.

2. The grease dispensing gun as claimed in claim 1, wherein said first end of said barrel has a flange extending radially inward therefrom and said board is securely engaged with said flange.

3. The grease dispensing gun as claimed in claim 2, wherein a seal is connected between said flange and said connection member.

## Patentansprüche

1. Pneumatische Schmierpistole mit der Möglichkeit zur Einstellung des Winkels zwischen einem Schmierbehälter und einem Griff, wobei die Schmierpistole einen Griffabschnitt (20), ein Rohr (30), eine Düse (40) und einen Schmierbehälter (50) umfasst,
**dadurch gekennzeichnet,**
**dass** der Griffabschnitt (20) und das Rohr (30) schwenkbar miteinander verbunden sind, wobei die Düse (40) starr am Rohr (30) befestigt ist, und wobei die Düse (40) und der Schmierbehälter (50) fest miteinander verbunden sind, und zwar derart, dass der Schmierbehälter (50) zusammen mit der Düse (40) und dem Rohr (30) um den Griffabschnitt (20) schwenkbar angeordnet ist.

2. Pneumatische Schmierpistole mit der Möglichkeit zur Einstellung des Winkels zwischen einem Schmierbehälter und einem Griff nach Anspruch 1,
**dadurch gekennzeichnet,**
- **dass** der Griffabschnitt (20) an seinem oberen Abschnitt mit einer Verbindungshülse (22) versehen ist, wobei das Rohr (30) einen Endabschnitt (32) aufweist, der sich in Richtung zum Inneren verjüngt, wobei die Verbindungshülse (22) des Griffabschnitts (20) auf dem Endabschnitt (32) montierbar ist,
- **dass** eine Befestigungsscheibe (33) im Inneren des Rohrs (30) vorgesehen ist, und
- **dass** eine Gewindestange (34) ausgehend von der Verbindungshülse (22) des Griffabschnitts (20) durch das Rohr (30) hindurch verläuft und in die Befestigungsscheibe (33) hineinschraubbar ist,
wodurch eine zuverlässige Verbindung gewährleistet ist.

3. Pneumatische Schmierpistole mit der Möglichkeit zur Einstellung des Winkels zwischen einem Schmierbehälter und einem Griff nach Anspruch 1,
**dadurch gekennzeichnet,**
**dass** zwischen dem Endabschnitt (32) des Rohrs (30) und der Verbindungshülse (22) des Griffabschnitts (20) ein flexibler Dichtring (35) vorgesehen ist, der für ein dichtes Anliegen des Endabschnitts (32) des Rohrs (30) gegen die Innenwand der Verbindungshülse (22) sorgt.

## Revendications

1. Pistolet à graisse, comprenant :
une poignée ayant un dispositif de détente et un raccord qui y est respectivement attaché, un élément de raccordement raccordé à une extrémité supérieure de ladite poignée ;
un canon ayant sa première extrémité engagée en rotation avec une périphérie interne dudit élément de raccordement, un élément de buse raccordé à une deuxième extrémité dudit canon et un réservoir raccordé audit élément de buse, un panneau raccordé à ladite première extrémité dudit canon, et
un boulon s'étendant à travers ledit élément de raccordement et engagé avec ledit panneau.

2. Pistolet à graisse selon la revendication 1, dans lequel ladite première extrémité dudit canon a une bride s'étendant vers l'intérieur dans le sens radial à partir d'elle et dans lequel ledit panneau est engagé fermement avec ladite bride.

3. Pistolet à graisse selon la revendication 2, dans lequel un joint d'étanchéité est raccordé entre ladite bride et ledit élément de raccordement.
